# EUROPÄISCHE PATENTSCHRIFT

(11) **EP 1 163 143 B1**
(45) Veröffentlichungstag und Bekanntmachung des Hinweises auf die Patenterteilung: **01.10.2003**
(21) Anmeldenummer: 00912242.5
(22) Anmeldetag: 07.03.2000
(51) Int. Cl.: B62D 31/02, B62D 29/00, B62D 33/04

(54) **PLATTENFÖRMIGES STRANGPRESSPROFIL**
PLATE-SHAPED EXTRUDED PROFILE
PROFILE EXTRUDE SOUS FORME DE PLAQUE

(30) Priorität: 19.03.1999 AT 50399
(43) Veröffentlichungstag der Anmeldung: 19.12.2001
(73) Patentinhaber: Siemens SGP Verkehrstechnik GmbH, 1110 Wien (AT)
(72) Erfinder: SKLENAR, Peter, A-1170 Wien (AT)
(74) Vertreter: Matschnig, Franz, Dipl.-Ing.
(86) Internationale Anmeldenummer: AT0000057
(87) Internationale Veröffentlichungsnummer: WO00056589

(56) Entgegenhaltungen:
- FR-A- 2 510 061
- GB-A- 1 288 454

## Beschreibung

Die Erfindung betrifft ein plattenförmiges Strangpressprofil zur Herstellung eines Plattenverbandes, wobei an einem der Seitenränder des Strangpressprofils eine längsverlaufende U-förmige Ausnehmung ausgebildet ist, die von zwei Stegen begrenzt ist, von denen der eine Steg an seinem freien Ende einen zylinderförmigen Wulst aufweist, und am anderen der Seitenränder ein Fortsatz ausgebildet ist, der in seinem dem Wulst zugeordneten Bereich eine dem Wulst entsprechend geformte Kehle aufweist, wobei die Tiefe der Ausnehmung der Länge des Fortsatzes entspricht und der Fortsatz an seiner Seite, die dem Steg zugeordnet ist, welcher dem den Wulst aufweisenden Steg gegenüberliegt, als Zylinderfläche ausgebildet ist.

Der Erfindung liegt die Aufgabe zugrunde, ein plattenförmiges Strangpressprofil zu schaffen, mit dem gerade, geknickt und polygonal verlaufende Plattenverbände in einfacher Weise hergestellt werden können.

Verbindungen zwischen zwei oder mehreren Strangpressprofilen zur Bildung eines geraden Plattenverbandes sind in großer Zahl bekannt.

Ein derartiges Strangpressprofil zur Bildung einer Ladebordwand eines Fahrzeuges wird in der GB 1 288 454 A1 beschrieben. Die der GB 1 288 454 zugrundeliegende Problemstellung besteht darin, eine einen Laderaum begrenzende gerade Profilplatte aus ineinandergreifenden Hohlprofilen zu schaffen, mit der das unbeabsichtigte Eindringen von Wasser in den Laderaum verhindert werden soll. Zu diesem Zweck sind die Stossstellen der Hohlprofile derart ausgebildet, dass sie zusammengesetzt eine Kammer begrenzen, welche einen größeren Querschnitt als die angrenzenden Wandungen aufweist. Um den Abfluss von in die Kammer eingedrungenen Wasser zu erleichtern, ist unterhalb der Kammer eine im Querschnitt kugelgelenkartige Passung zwecks Bildung eines Wasserabflusses vorgesehen.

Die FR 2 510 061 A2 beschreibt eine aus Hohlprofilteilen mit rechteckigem Querschnitt zusammengesetzte Seitenwand für Transportmulden, wobei die Hohlprofilteile im Bereich ihrer Stossstellen formschlüssig in einander greifen, wodurch ein geradliniger Verlauf des Plattenverbandes erreicht wird.

Die gestellte Aufgabe wird mit einem Strangpressprofil der eingangs genannten Art erfindungsgemäß dadurch gelöst, dass der Radius der Zylinderfläche dem Abstand der Achse des Wulstes vom freien Ende des gegenüberliegenden Steges entspricht.

Auf diese Weise lassen sich ein oder mehrere derartige Strangpressprofile zu einem gerade, geknickt oder polygonal verlaufenden Plattenverband aneinanderreihen und miteinander verbinden, wozu zweckmäßigerweise die Strangpressprofile miteinander verschweißt werden. Durch die erfindungsgemäße Ausgestaltung der Seitenränder des Strangpressprofils sind die einzelnen Profile vor und während der Verbindung in ihrer gegenseitigen Relativlage fixiert. Zur Herstellung eines Plattenverbandes wird bei unter einem Winkel zueinander angeordneten Profilen der Wulst des einen Profils in die Kehle des anderen Profils eingesetzt, worauf die Profile relativ zueinander verschwenkt werden und somit die Zylinderfläche längs dem zugeordneten Steg in die U-förmige Ausnehmung eingeführt wird, bis die erwünschte Relativlage der Profile erreicht ist, worauf die Verbindung bzw. Verschweißung erfolgt. Das Strangpressprofil ist zur Gestaltung von Wänden, Trennwänden, Dächern sowie im Fahrzeugbau vorgesehen.

In vorteilhafter weiterer Ausgestaltung der Erfindung kann der den Wulst aufweisende Steg länger sein als der ihm gegenüberliegende Steg, wodurch eine Vergrößerung des Winkelbereiches erzielt wird, unter dem die Profile zueinander angeordnet werden können.

Von Vorteil ist weiters, wenn die Zylinderfläche mit längsverlaufenden Riefen versehen ist, und wenn der der Zylinderfläche zugeordnete Steg an seinem freien Ende eine in eine der Riefen eingreifende längsverlaufende Kante aufweist. Hierdurch wird eine bessere gegenseitige Fixierung der Profile während der Verbindung erreicht.

Dabei können die Riefen in gleichen vorbestimmten Abständen angeordnet sein, wodurch die Strangpressprofile unter verschiedenen vorbestimmten Winkeln zueinander angeordnet werden können.

Weiters kann die Kehle eine etwa mittig angeordnete Vertiefung als Schweißbadsicherung aufweisen.

Desgleichen kann der der Zylinderfläche zugeordnete Steg im Bereich seines freien Endes eine Vertiefung als Schweißbadsicherung aufweisen.

Dabei kann die Vertiefung an die längsverlaufende Kante anschließen. Auf diese Weise läßt sich die Fixierung verstärken.

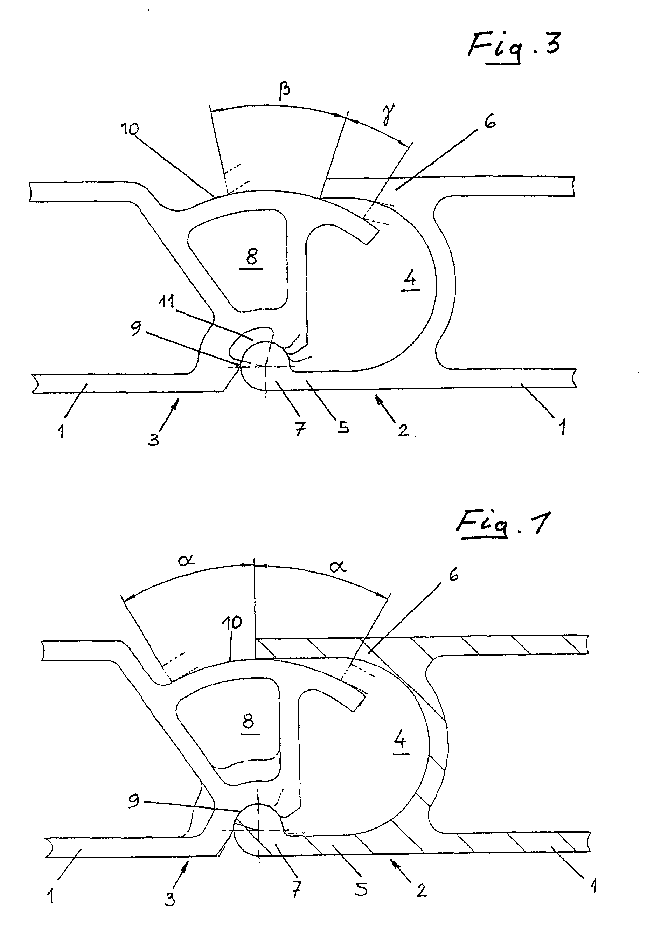

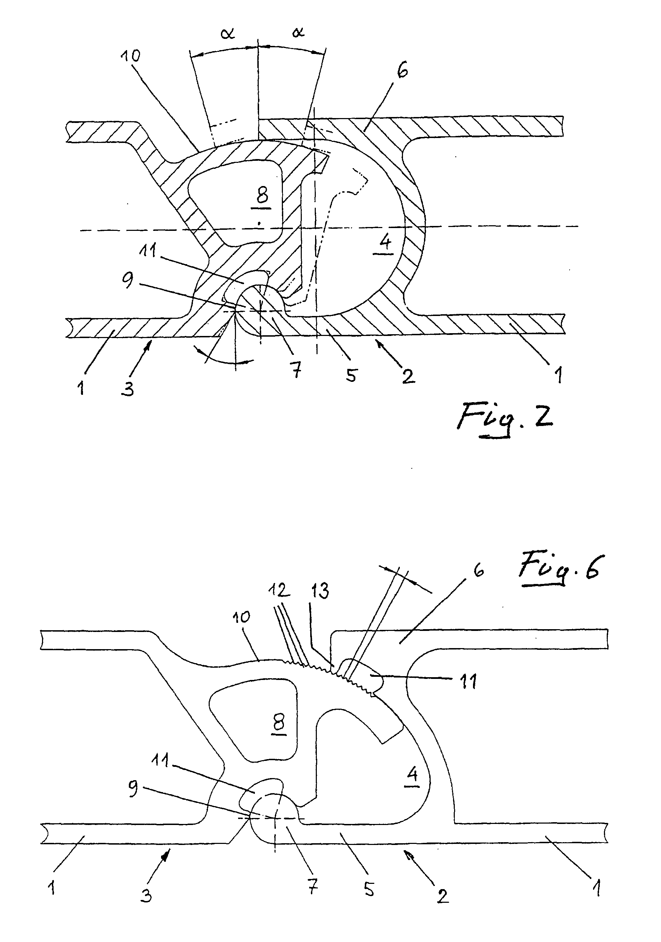

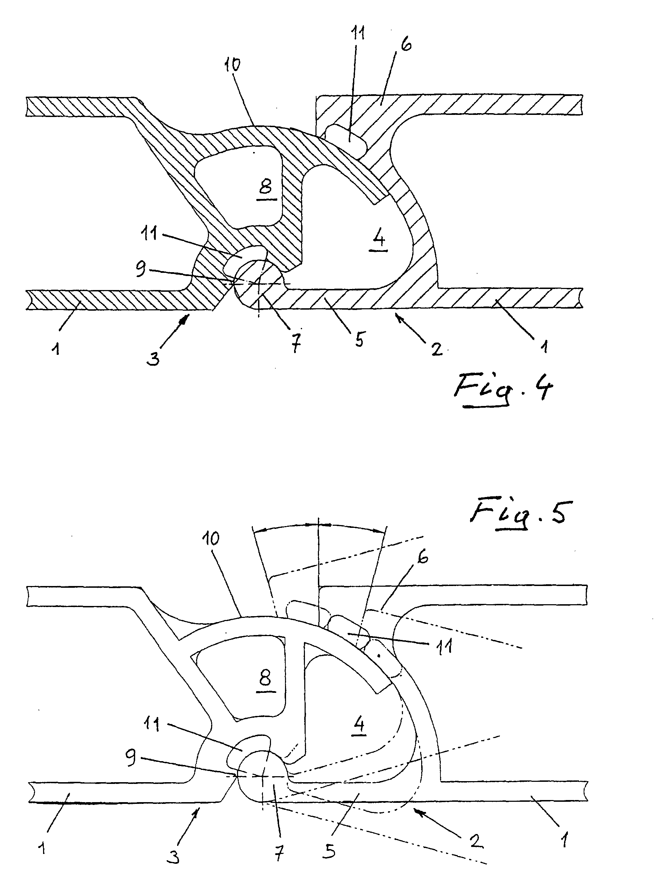

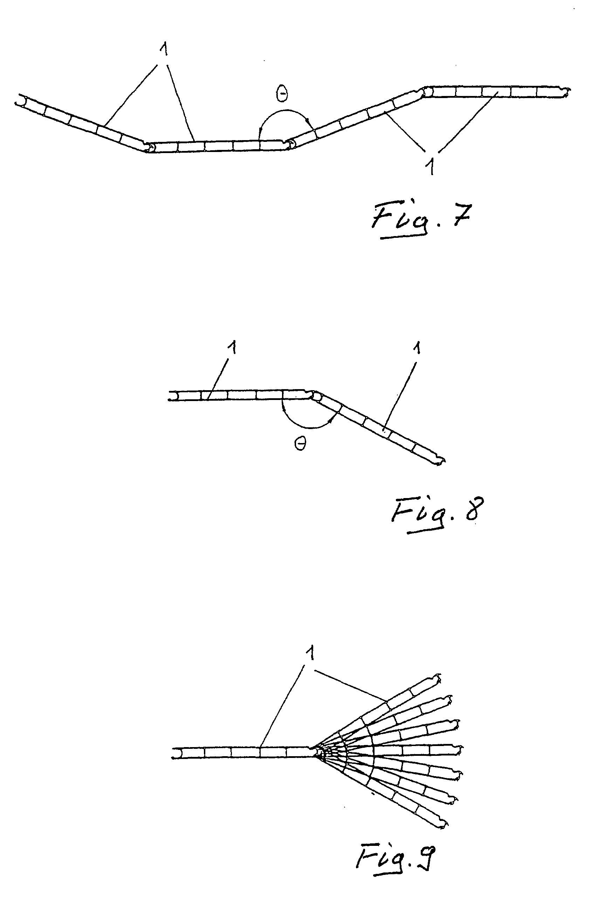

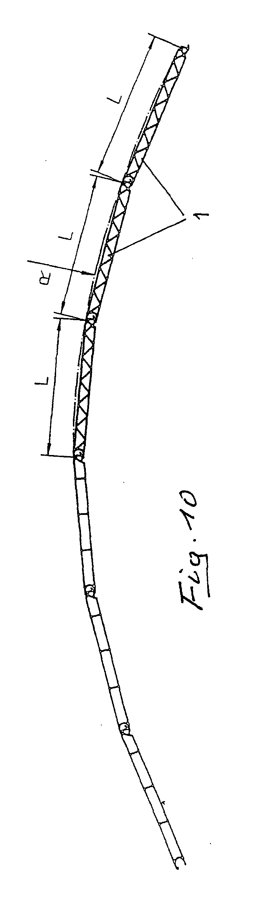

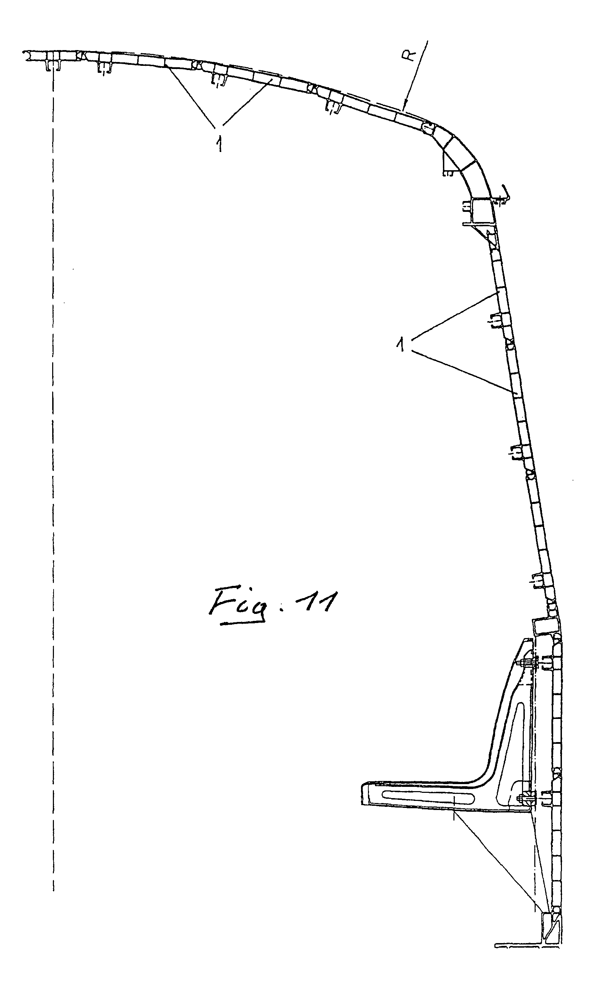

Die Erfindung wird im folgenden anhand bevorzugter Ausführungsbeispiele näher erläutert, die in den Zeichnungen dargestellt, sind; es zeigen
■ Fig. 1 die Verbindungsstelle zweier Strangpressprofile nach einer ersten Ausführungsform, im Schnitt,
■ Fig. 2 die Verbindungsstelle einer Variante dieser Ausführungsform, im Schnitt,
■ Fig. 3 die Verbindungsstelle zweier Strangpressprofile nach einer zweiten Ausführungsform, im Schnitt,
■ Fig. 4 die Verbindungsstelle zweier Strangpressprofile nach einer dritten Ausführungsform, im Schnitt,
■ Fig. 5 diese Verbindungsstelle im Schnitt, wobei der Verschwenkbereich der Strangpressprofile angedeutet ist,
■ Fig. 6 die Verbindungsstelle zweier Strangpressprofile nach einer vierten Ausführungsform, im Schnitt,
■ Fig. 7 einen Schnitt durch einen polygonalen Plattenverband,
■ Fig. 8 einen Schnitt durch zwei unter dem größtmöglichen Winkel geknickt aneinandergeschlossene Strangpressprofile,
■ Fig. 9 einen Schnitt durch zwei aneinandergeschlossene Strangpressprofile zur Darstellung der gegenseitigen Verschwenkmöglichkeit,
■ Fig. 10 einen Schnitt durch einen ein Dach bildenden polygonalen Plattenverband, und
■ Fig. 11 einen Schnitt durch einen einen Fahrzeugaufbau bildenden Plattenverband.

Fig. 1 zeigt einen Schnitt durch die Verbindungsstelle zweier gleich ausgestalteter Strangpressprofile 1, 1, von denen jeweils lediglich die Seitenränder 2, 3 dargestellt sind. Der Seitenrand 2 des einen (in der Zeichnung rechten) Strangpressprofils 1 weist eine U-förmige Ausnehmung 4 auf, die von zwei parallelen Stegen 5, 6 begrenzt ist. Der eine Steg 5 weist an seinem freien Ende einen zylindrischen Wulst 7 auf. Am anderen Seitenrand 3 ist ein Fortsatz 8 ausgebildet, der in seinem dem Wulst 7 zugeordneten Bereich eine dem Wulst 7 entsprechend geformte Kehle 9 aufweist und an der gegenüberliegenden Seite von einer Zylinderfläche 10 begrenzt ist. De Radius dieser Zylinderfläche 10 entspricht dem Abstand der Achse des Wulstes 7 vom freien Ende des gegenüberliegenden Steges 6.

Zur Verbindung der beiden Strangpressprofile 1, 1 werden dieselben unter einem solchen Winkel angeordnet, daß sich das freie Ende des Fortsatzes 8 im Abstand vom freien Ende des ihm zugeordneten Steges 6 des anderen Strangpressprofils befindet, und sodann der Wulst 7 in die Kehle 9 eingesetzt. Hierauf wird durch gegenseitiges Verschwenken der beiden Strangpressprofile 1, 1 der Fortsatz 8 in die U-förmige Ausnehmung 4 eingeführt. Die beiden Strangpressprofile 1, 1 können aus ihrer in Fig. 1 gezeigten koplanaren Lage um einen Winkel α verschwenkt werden, der etwa 30° beträgt.

Fig. 2 zeigt einen Schnitt durch eine Variante dieser Ausführungsform, bei welcher der Winkel a geringer ist. Die übrige Ausgestaltung der Seitenränder 2, 3 des Strangpressprofils 1 entspricht der vorstehend beschriebenen, mit der Ausnahme, daß die Kehle 9 eine mittige Vertiefung 11 aufweist, die als Schweißbadsicherung dient.

Die Ausführungsform gemäß Fig. 3 entspricht im wesentlichen derjenigen der vorbeschriebenen, mit der Ausnahme, daß der den Wulst 7 aufweisende Steg 5 länger ist, als der ihm gegenüberliegende, der Zylinderfläche 10 zugeordnete Steg 6 ist. Wie mit den Winkeln β und γ angedeutet, wird mit dieser Ausführungsform ein größerer Verschwenkbereich der Strangpressprofile 1, 1 erreicht.

Fig. 4 zeigt einen Schnitt durch eine weitere Ausführungsform, die im wesentlichen den bisher erläuterten Ausführungsformen entspricht, jedoch auch im Bereich des freien Endes des der Zylinderfläche 10 zugeordneten Steges 6 eine Vertiefung 11 als Schweißbadsicherung besitzt.

In Fig. 5 sind die Verschwenkmöglichkeiten der Strangpressprofile 1, 1 dieser Ausführungsform dargestellt.

Gemäß Fig. 6 ist bei einer weiteren Ausführungsform die Zylinderfläche 10 mit einem Abschnitt längsverlaufender Riefen 12 versehen, wobei der der Zylinderfläche 10 zugeordnete Steg 6 an seinem freien Ende eine in eine der riefen 12 eingreifende längsverlaufende scharfe Kante 13 aufweist. Bei der Verbindung der beiden Strangpressprofile 1, 1 auf die vorstehend geschilderte Weise gleitet zwar die Kante 13 wegen der Materialelastizität zur erwünschten Riefe 12, wird jedoch in ihrer Sollage ausreichend festgehalten, um die beiden Strangpressprofile 1, 1 während ihrer Verschweißung zu fixieren. Vorzugsweise sind die Riefen in gleichen vorbestimmten Abständen d angeordnet, wodurch sich die Möglichkeit ergibt, die Strangpressprofile 1, 1 unter verschiedenen vorbestimmten Winkeln Q zueinander anzuordnen (Fig. 7 bis 9).

Fig. 7 zeigt einen Schnitt durch einen aus mehreren erfindungsgemäßen Strangpressprofilen 1 hergestellten polygonalen Plattenverband, der z. B. als Trennwand dienen kann.

Fig. 8 zeigt zwei Strangpressprofile 1, die unter dem größtmöglichen Winkel zueinander verschwenkt sind. Der gebildete Plattenverband kann ebenfalls eine Trennwand bilden.

Fig. 9 zeigt zwei Strangpressprofile 1 in unterschiedlichen Relativlagen.

Fig. 10 zeigt einen polygonalen Plattenverband aus mehreren Strangpressprofilen 1, der als Dach ausgebildet ist. Die aneinandergeschlossenen Strangpressprofile 1 weisen eine Breite L auf und bilden einen Plattenverband, der einem imaginären Zylinder mit dem Radius R eingeschrieben ist.

Fig. 11 zeigt einen Aufbau eines Schienenfahrzeuges, der zum Teil aus Plattenverbänden besteht, die mit dem erfindungsgemäßen Strangpressprofil 1 hergestellt sind. An der Seite sind zwei jeweils ebene Plattenverbände gezeigt, während das Dach von einem polygonalen Plattenverband gebildet ist, der einem imaginären Zylinder mit dem Radius R eingeschrieben ist.

## Patentansprüche

1. Plattenförmiges Strangpressprofil zur Herstellung eines Plattenverbandes, wobei an einem der Seitenränder (2) des Strangpressprofils (1) eine längsverlaufende U-förmige Ausnehmung (4) ausgebildet ist, die von zwei Stegen (5, 6) begrenzt ist, von denen der eine Steg (5) an seinem freien Ende einen zylinderförmigen Wulst (7) aufweist, und am anderen der Seitenränder (3) ein Fortsatz (8) ausgebildet ist, der in seinem dem Wulst (7) zugeordneten Bereich eine dem Wulst (7) entsprechend geformte Kehle (9) aufweist, wobei die Tiefe der Ausnehmung (4) der Länge des Fortsatzes (8) entspricht, **dadurch gekennzeichnet, dass** der Fortsatz (8) an seiner Seite, die dem Steg (6) zugeordnet ist, welcher dem den Wulst (7) aufweisenden Steg (5) gegenüberliegt, als Zylinderfläche (10) ausgebildet ist und der Radius der Zylinderfläche dem Abstand der Achse des Wulstes (7) vom freien Ende des gegenüberliegenden Steges (6) entspricht.

2. Strangpressprofil nach Anspruch 1, **dadurch gekennzeichnet, dass** der den Wulst (7) aufweisende Steg (5) länger ist als der ihm gegenüberliegende Steg (6).

3. Strangpressprofil nach Anspruch 1 oder 2, **dadurch gekennzeichnet, dass** die Zylinderfläche (10) mit längsverlaufenden Riefen (12) versehen ist und dass der der Zylinderfläche (10) zugeordnete (6) Steg an seinem freien Ende eine in eine der Riefen (12) eingreifende längsverlaufende Kante (13) aufweist.

4. Strangpressprofil nach Anspruch 3, **dadurch gekennzeichnet, dass** die Riefen (12) in gleichen vorbestimmten Abständen (d) angeordnet sind.

5. Strangpressprofil nach einem der Ansprüche 1 bis 4, **dadurch gekennzeichnet, dass** die Kehle (9) eine etwa mittig angeordnete Vertiefung (11) als Schweißbadsicherung aufweist.

6. Strangpressprofil nach einem der Ansprüche 1 bis 5, **dadurch gekennzeichnet, dass** der der Zylinderfläche (10) zugeordnete Steg (6) im Bereich seines freien Endes eine Vertiefung (11) als Schweißbadsicherung aufweist.

7. Strangpressprofil nach Anspruch 6, **dadurch gekennzeichnet, dass** die Vertiefung (11) an die längsverlaufende Kante (13) anschließt.

## Claims

1. Plate-like extruded profile for production of a plate combination, wherein on one of the side edges (2) of the extruded profile (1) a longitudinally-extending U-shaped recess (4) is formed which is defined by two webs (5, 6), of which one web (5) has a cylindrical bead (7) at its free end, and on the other of the side edges (3) a projection (8) is formed which in its region allocated to the bead (7) has a groove (9) formed to correspond to the bead (7), wherein the depth of the recess (4) corresponds to the length of the projection (8), **characterised in that** the projection (8) is formed as a cylinder surface (10) on its side which is allocated to the web (6) which lies opposite the web (5) comprising the bead (7), and the radius of the cylinder surface corresponds to the distance of the axis of the bead (7) from the free end of the opposite web (6).

2. Extruded profile as claimed in claim 1, **characterised in that** the web (5) comprising the bead (7) is longer than the web (6) opposite it.

3. Extruded profile as claimed in claim 1 or 2, **characterised in that** the cylinder surface (10) is provided with longitudinally extending channels (12) and that, at its free end the web allocated (6) to the cylinder surface (10) has a longitudinally extending edge (13) engaging in one of the channels (12).

4. Extruded profile as claimed in claim 3, **characterised in that** the channels (12) are disposed at equal predetermined distances (d).

5. Extruded profile as claimed in any one of claims 1 to 4, **characterised in that** the groove (9) has a depression (11) disposed approximately in its centre as a weld pool securing means.

6. Extruded profile as claimed in any one of claims 1 to 5, **characterised in that** the web (6) allocated to the cylinder surface (10) has a depression (11) in the region of its free end as a weld pool securing means.

7. Extruded profile as claimed in claims 6, **characterised in that** the depression (11) adjoins the longitudinally extending edge (13).

## Revendications

1. Profilé extrudé en forme de plaque pour la fabrication d'un ensemble de plaques, sur l'un des bords latéraux (2) du profilé extrudé (1) un évidement (4) formant un U et s'étendant dans le sens longitudinal étant prévu, qui est délimité par deux nervures (5, 6), dont l'une des nervures (5) présente à son extrémité libre un renflement (7) cylindrique, et à l'autre des bords latéraux (3) un appendice (8) est formé, qui dans sa zone associée au renflement (7) présente une gorge (9) de forme complémentaire de celle du renflement (7), la profondeur de l'évidement (4) correspondant à la longueur de l'appendice (8), **caractérisé en ce que** l'appendice (8), sur son côté associé à la nervure (6) située en regard de la nervure (5) présentant le renflement (7), est configuré comme une surface cylindrique (10), et **en ce que** le rayon de la surface cylindrique correspond à la distance de l'axe du renflement (7) par rapport à l'extrémité libre de la nervure (6) située en regard.

2. Profilé extrudé selon la revendication 1, **caractérisé en ce que** la nervure (5) présentant le renflement (7) est plus longue que la nervure (6) située en regard de celle-ci.

3. Profilé extrudé selon la revendication 1 ou 2, **caractérisé en ce que** la surface cylindrique (10) est munie de rainures (12) s'étendant dans le sens longitudinal, et **en ce que** la nervure (6) associée à la surface cylindrique (10) présente, à son extrémité libre, un bord (13) s'étendant dans le sens longitudinal et s'engageant dans l'une des rainures (12).

4. Profilé extrudé selon la revendication 3, **caractérisé en ce que** les rainures (12) sont disposées à des distances (d) prédéterminées identiques.

5. Profilé extrudé selon l'une des revendications 1 à 4, **caractérisé en ce que** la gorge (9) présente un creux (11) disposé sensiblement au centre et servant comme protection du bain de soudure.

6. Profilé extrudé selon l'une des revendications 1 à 5, **caractérisé en ce que** la nervure (6) associée à la surface cylindrique (10), dans la zone de son extrémité libre, présente à creux (11) servant comme protection du bain de soudure.

7. Profilé extrudé selon la revendication 6, **caractérisé en ce que** le creux (11) est situé en prolongation du bord (13) s'étendant dans le sens longitudinal.
